# EUROPEAN PATENT APPLICATION

(11) **EP 2 124 420 A1**
(43) Date of publication of application: **25.11.2009**
(21) Application number: 09005073.3
(22) Date of filing: 06.04.2009
(51) Int. Cl.: H04L 29/08, H04L 29/06, H04N 1/32

(54) **Multimedia transmission system with a cross-platform mobile communication platform**

(30) Priority: 21.05.2008 TW 97118791
(71) Applicant: Huveur Technologies Inc., Taichung city 40360 (TW)
(72) Inventor: Tung, Ning, Taiping City Taichung County 411 (TW); Fothergill-Zittrer, Nicholas David, Toronto M4M-2Z4 (CA)
(74) Representative: Strehl, Peter

(57) **Abstract**

A multimedia transmission system with a cross-platform mobile communication platform is disclosed. In accord with the invention, when a mobile communication device 1 transmits multimedia data to a service provider via the telecommunication service exchange system 2, the multimedia data are stored in a remote server 5 once specific verification is done. A multimedia display device 3 can thus download the multimedia data to a storage unit for the user to view.

## Description

### BACKGROUND OF THE INVENTION

### Field of Invention

The invention relates to a multimedia transmission system and, in particular, to a multimedia transmission system with a cross-platform mobile communication platform.

### Related Art

Mobile communication devices such as mobile phones usually have the function of a regular phone and sending text messages. In the modem world full of multimedia data, such functions are insufficient for some consumers. Therefore, some mobile communication devices in recent years have the functions of sending multimedia short (MMS) messages or multimedia mail. The user can immediately share multimedia data with his or her friends. However, such sharing is limited between mobile communication devices (e.g., mobile phones). The invention aims at providing a means to allow multimedia data sharing between multimedia display devices of different types.

### SUMMARY OF THE INVENTION

An objective of the invention is to solve the above-mentioned problems by providing a multimedia transmission system with a cross-platform mobile communication platform. The mobile communication device is connected with a management server to transmit relevant data and the data for connecting to a remote server to an intermediate server. A multimedia display device is enabled to connect to the intermediate server, gets verified and obtains the data for connecting to the remote server, and then connects to the remote server. The assigned multimedia data are returned for storage. The mobile communication device can directly send the shared multimedia data to the multimedia display device in the way of sending simple multimedia data.

To achieve the above-mentioned objective, the invention includes:

a mobile communication device, which has an identification (ID) code;

a multimedia display device, which has an ID code, a data processing unit, a display module, a storage unit, and a network connection device for connecting to a network, the display module, the storage unit, and the network connection device being electrically connected with the data processing unit;

a management server, which has a service number and a first user database for storing the ID number, the ID code, and the data for connecting to a remote server, so that a mobile communication device can transmit multimedia data to the management server according to the service number via a telecommunication service exchange system and, after verifying the ID number, the management server transmits the received multimedia data to the designated remote server according to the remote server data in the first user database;

an intermediate sever, which has a second user database for storing the ID code, the data for connecting to the remote server, and user's data so that the intermediate server automatically connects with the remote server and, when the multimedia display device connects to the intermediate server and the intermediate server verifies the ID code, the multimedia display device connects to the designated remote server according to the remote server data on the second user database and returns the corresponding multimedia data on the remote server to the storage unit for storage, followed by displaying on the display module.

### BRIEF DESCRIPTION OF THE DRAWINGS

The invention will become more fully understood from the detailed description given herein below illustration only, and thus is not limitative of the present invention, and wherein:

FIG. 1 is a flowchart of transmission according to the invention; and

FIG. 2 is a flowchart of transmission according to a second embodiment of the invention.

### DETAILED DESCRIPTION OF THE INVENTION

The present invention will be apparent from the following detailed description, which proceeds with reference to the accompanying drawings, wherein the same references relate to the same elements.

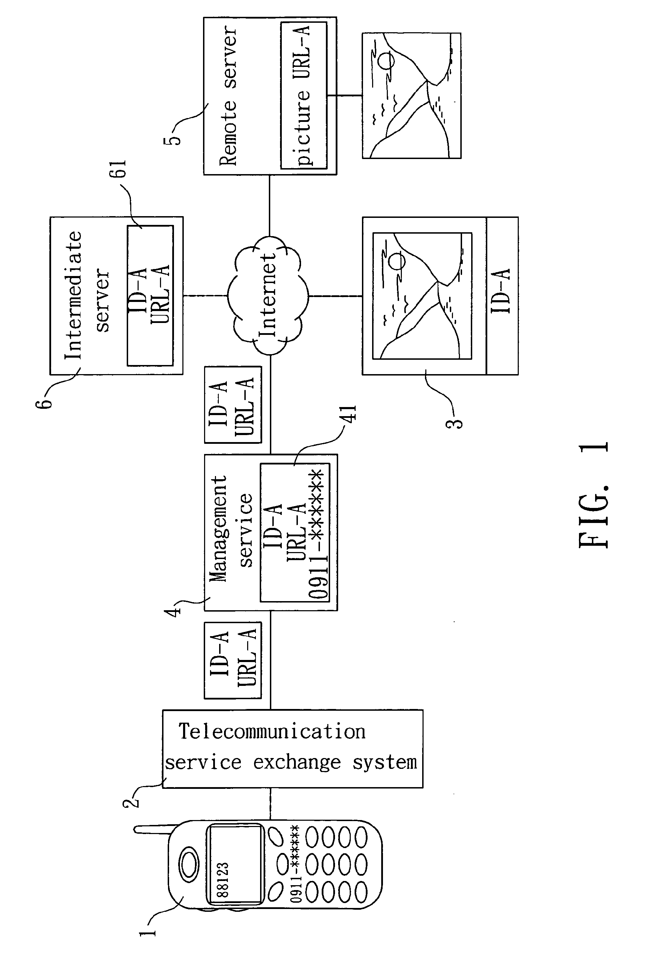

Please refer to FIG. 1 for a first embodiment of the invention. This embodiment provides a multimedia transmission system with a cross-platform mobile communication platform. It includes: a mobile communication device 1, a multimedia display device 3, a management server 4, and an intermediate server 6.

The mobile communication device 1 has an ID number, which is used for the connection between the mobile communication device 1 and the telecommunication service exchange system 2. Such a mobile communication device 1 in this embodiment is a mobile phone, and the ID number is the phone number (e.g., 0911-xxxxxx as shown in the drawing). The procedure starts by calling the phone number to connect to the telecommunication service exchange system 2.

The multimedia display device 3 has an ID code (ID-A shown in the drawing). It further has a data processing unit, a display module, a storage unit, and a network connection device (not shown). The network connection device is used to connect to a network. The display module, the storage unit, and the network connection device are electrically connected with the data processing unit.

The management server 4 has a service number, which is used for the mobile communication device 1 to call and execute the service number for a connection between the mobile communication device 1 and the management server 4. The service number is 88123 in this embodiment. The management server 4 has a first user database 41 for storing the ID number of the mobile communication device 1, the ID code of the multimedia display device, and the data for connecting to a remote server 5.

In this embodiment, the remote server 5 is a storage device. It can be a storage device managed by a server or a network server of an ordinary web site provider or an individual. Moreover, the storage device of the remote server 5 can be a network storage space, a blog, a network photo album, or a personal audio/video (AV) database.

The intermediate server 6 has a second user database 61 for storing the ID code of the multimedia display device 3, the data for connecting to the remote server 5, and user's data so that the intermediate server 6 can automatically connect with the remote server 5.

The mobile communication device 1 transmits the multimedia data according to the service number to the management server 4 via the telecommunication service exchange system 2. After the management server 4 verifies the ID number, it transmits the received multimedia data to the designated remote server 5 according to the remote server 5 data in the first user database 41.

When the multimedia display device 3 is connected to the intermediate server 6, the intermediate server 6 checks the ID code. Afterwards, the multimedia display device 3 connects to the designated remote server 5 according to the remote server 5 data in the second user database 61, and returns the corresponding multimedia data on the remote server 5 to the storage unit for storage and to the display module for display. In this embodiment, the intermediate server 6 can be stored with data of more than one user.

By connecting the mobile communication device 1 to a management server 4, the web address of pictures to be downloaded (URL-A in the drawing) and the ID code (ID-A) of the multimedia display device 3 are transmitted to the intermediate server 6, so that the multimedia display device 3 with the corresponding ID code can download pictures from the web address. The mobile communication device 1 can directly download the designated pictures from the picture web site to the multimedia display device 3 via the management server 4 and the intermediate server 6, following simple operations with the service number.

Therefore, the invention uses an ordinary mobile communication device 1 to cross to a different platform. That is, the mobile communication device 1 is used as a medium. Following a service number of the communication target, the designated multimedia data for sharing can be transmitted to the multimedia display device 3 through simple operations. In addition to between mobile communication devices, the communication function of them can be extended to other platforms.

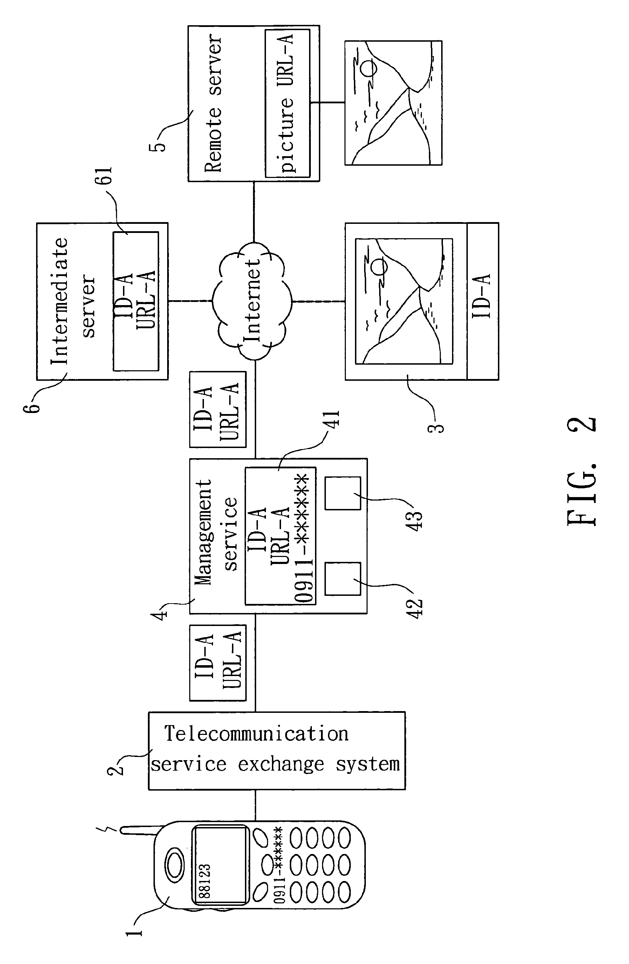

Of course, the invention has many other embodiments with variations in the detail. Please refer to FIG. 2 for a second embodiment of the invention. The management server 4 is added with an operating interface 42 for web browsing and setting contents stored in the first user database 41.

The management server 4 is further provided with a storage device 43. The management server 4 can store the multimedia data to be transmitted in the storage device 43, and transmit the data linking to the stored multimedia data to the intermediate server 5 and stores them in the second user database 61.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A multimedia transmission system with a cross-platform mobile communication platform **characterized in that** it has:
a mobile communication device 1 having an identification (ID) number;
a multimedia display device 3 having an ID code, a data processing unit, a display module, a storage unit, and a network connection device for connecting to a network, with the display module, the storage unit, and the network connection device all electrically connected with the data processing unit;
a management server 4 having a service number and a first user database 41 for storing the ID number, the ID code, and the data for connecting to a remote server 5 so that the mobile communication device 1 transmits multimedia data to the management server 4 according to the service number via a telecommunication service exchange system 2 and, after verifying the ID number, the management server 4 transmits the received multimedia data to the designated remote server 5 according to the remote server 5 data in the first user database 41; and
an intermediate sever 6, which has a second user database 61 for storing the ID code, the data for connecting to the remote server 5, and user's data so that the intermediate server 6 automatically connects with the remote server 5 and, when the multimedia display device 3 connects to the intermediate server 6 and the intermediate server 6 verifies the ID code, the multimedia display device 3 connects to the designated remote server 5 according to the remote server 5 data on the second user database 61 and returns the corresponding multimedia data on the remote server 5 to the storage unit for storage, followed by displaying on the display module.

2. The multimedia transmission system with a cross-platform mobile communication platform of claim 1 **characterized in that:** the first and second user databases 41, 61 store more than one set of data.

3. The multimedia transmission system with a cross-platform mobile communication platform of claim 1 **characterized in that:** the remote server 5 is a storage device or a storage device managed by a server.

4. The multimedia transmission system with a cross-platform mobile communication platform of claim 3 **characterized in that:** the storage device of the remote server 5 is a network storage space, a blog, a network photo album, or a personal audio/video database.

5. The multimedia transmission system with a cross-platform mobile communication platform of claim 1 **characterized in that:** the remote server 5 is an ordinary web server of a web site provider or an individual.

6. The multimedia transmission system with a cross-platform mobile communication platform of claim 1 **characterized in that:** the management server 5 has an operating interface for web browsing and setting the storage contents of the first user database 41.

7. The multimedia transmission system with a cross-platform mobile communication platform of claim 1 **characterized in that:** the management server 4 is further provided with a storage device 43 and stores multimedia data to be transmitted therein, and the data linking to the stored multimedia data are transmitted to the intermediate server 6 and stored in the second user database 61.
